# EUROPEAN PATENT APPLICATION

(11) **EP 4 560 233 A1**
(43) Date of publication of application: **28.05.2025**
(21) Application number: 23928458.1
(22) Date of filing: 22.12.2023
(51) Int. Cl.: F25D 29/00, F25D 13/00, F25D 17/06, F25D 19/00, F25B 41/40, F25B 41/31, F25B 43/00

(54) **CONTROL METHOD AND DEVICE FOR COLD STORE, COLD STORE AND STORAGE MEDIUM**

(30) Priority: 20.03.2023 CN 202310274744
(71) Applicant: Qingdao Haier Biomedical Co., Ltd., Qingdao, Shandong 266510 (CN)
(72) Inventor: ZHANG, Xiaofei, Qingdao, Shandong 266510 (CN); LIU, Zhanjie, Qingdao, Shandong 266510 (CN); WANG, Guangsheng, Qingdao, Shandong 266510 (CN); LI, Hongtao, Qingdao, Shandong 266510 (CN); CHEN, Haitao, Qingdao, Shandong 266510 (CN); LEI, Mianhong, Qingdao, Shandong 266510 (CN); WANG, Lixin, Qingdao, Shandong 266510 (CN); WANG, Wenming, Qingdao, Shandong 266510 (CN); LV, Shangwu, Qingdao, Shandong 266510 (CN)
(74) Representative: Michalski Hüttermann & Partner Patentanwälte mbB
(86) International application number: PCT/CN2023/141166
(87) International publication number: WO 2024/193154

(57) **Abstract**

The present application relates to the technical field of refrigeration. Disclosed is a control method for a cold store. The cold store is provided with a first refrigeration system and a second refrigeration system. The first refrigeration system comprises a first evaporator, a second evaporator, a first cold water storage tank and a first fan, wherein the first evaporator is installed inside the first cold water storage tank, and the second evaporator is installed relative to the first fan. The second refrigeration system comprises a third evaporator, a fourth evaporator, a second cold water storage tank and a second fan, wherein the third evaporator is installed inside the second cold water storage tank, and the fourth evaporator is installed relative to the second fan. The method comprises: acquiring a cold store temperature; and according to the temperature difference between the cold store temperature and a target temperature for the cold store, controlling the first refrigeration system and the second refrigeration system to operate. By means of the present application, the temperature in the cold store can be rapidly reduced in the initial stage of storage, and a low temperature in the cold store is maintained via cold accumulation in the later stage of storage, thereby facilitating the saving of energy. Further disclosed in the present application are a control device for the cold store, the cold store and a storage medium.

## Description

This application claims priority to Chinese Patent Application No. CN202310274744.1, filed on March 20, 2023, the content of which is incorporated herein by reference in its entirety.

### TECHNICAL FIELD

The present disclosure relates to the technical field of refrigeration, and more particularly to a controlling method and a controlling device for refrigerated storage, a refrigerated storage, and a storage medium.

### BACKGROUND

At present, a refrigerated storage is applied in storing refrigeration goods. Two types of conventional refrigerated storage, one is applied for medium-term to long-term storage, and the other is applied for temporary storage during transiting. The former type of refrigerated storage usually adapts an air-cooled finned evaporator as a part of the refrigeration system, the air-cooled finned evaporator is disposed inside of the refrigerated storage, and the refrigeration device of the refrigerated storage is in a constant power-on mode. In a case where the refrigeration system is operating, the air inside the refrigerated storage flows through the evaporator by the fan for heat exchange to reduce the temperature in the refrigerated storage. The latter type of refrigerated storage has a chilled liquid storage tank disposed inside. The evaporator is disposed inside the chilled liquid storage tank and is a part of the refrigeration system. The latter type firstly cools the chilled liquid to store cool-storage capacity, and then cooling the air inside the refrigerated storage by natural convection to reduce the temperature in the refrigerated storage.

During the implementation of the embodiment of the present disclosure, at least the following problems have been found in the related arts:

For the first type of refrigerated storage, in a case where the power is off, the temperature rises rapidly, and it is difficult to apply in an area with unstable electric power or for storing valuable goods, unless the refrigerated storage is equipped with an additional electric power generation system, otherwise, the goods have a risk to be damaged. For the second type of refrigerated storage, it is slow to reduce the temperature, especially in summer, while a large number of loads are stored at the same time, and it may be difficult to reduce the temperature to the optimum storage temperature in a limited period. Therefore, a solution for refrigerated storage is urgently needed that not only can rapidly reduce the temperature but also can maintain refrigeration.

It should be noted that the above information disclosed in the background is only for enhancing the understanding of the background of the present disclosure and thus may contain information that does not form the prior art known to one having ordinary skills in the art.

### SUMMARY

In order to have a basic understanding of some aspects of the disclosed embodiments, a brief summary is given below. The summary is not intended to be a general comment to identify crucial/essential constituent elements or to describe the protection scope of these embodiments but rather to serve as a preface to the detailed description that follows.

A controlling method and a controlling device for refrigerated storage, a refrigerated storage, and a storage medium are provided by the embodiment of the present disclosure, can rapidly reduce the temperature inside the refrigerated storage during the early storage period and maintain a low temperature inside the refrigerated storage by cool-storage during the later storage period, benefitting for saving energy.

In some embodiments, the refrigerated storage comprises a first refrigeration system and a second refrigeration system. The first refrigeration system comprises a first evaporator, a second evaporator, a first chilled liquid storage tank, and a first fan. The first evaporator is disposed inside the first chilled liquid storage tank, and the second evaporator corresponds to the first fan. The second refrigeration system comprises a third evaporator, a fourth evaporator, a second chilled liquid storage tank, and a second fan. The third evaporator is disposed inside the second chilled liquid storage tank, and the fourth evaporator corresponds to the second fan. The controlling method comprises: obtaining an environmental temperature of the refrigerated storage; and according to a temperature difference between the environmental temperature of the refrigerated storage and the target temperature of the refrigerated storage, controlling the first refrigeration system and the second refrigeration system to operate.

In some embodiments, the device comprises: a processor and a memory storing program instructions, where the processor is configured to execute the above controlling method for refrigerated storage.

In some embodiments, the refrigerated storage comprises: a first refrigeration system comprising a first evaporator, a second evaporator, a first chilled liquid storage tank, and a first fan; where the first evaporator is disposed inside the first chilled liquid storage tank, the second evaporator corresponds to the first fan, the first evaporator is disposed in a first branch, the second evaporator is disposed in a second branch, and the first branch and the second branch are provided in parallel; a second refrigeration system comprising a third evaporator, a fourth evaporator, a second chilled liquid storage tank and a second fan, where the third evaporator is disposed inside the second chilled liquid storage tank, the fourth evaporator corresponds to the second fan, the third evaporator is disposed in a third branch, the fourth evaporator is disposed in a fourth branch, and the third branch and the fourth branch are provided in parallel; and, the above controlling device for refrigerated storage electrically connected to the first refrigeration system and the second refrigeration system.

In some embodiments, the storage medium stores program instructions, and in a case where the program instructions are executed, the storage medium performs the above controlling method for refrigerated storage.

The controlling method and the controlling device for the refrigerated storage, and the refrigerated storage and the storage medium provided by the embodiment of the present disclosure have the following technical advantages:
In the embodiment of the present disclosure, the refrigerated storage is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By detecting the environmental temperature of the refrigerated storage and calculating the temperature difference between the environmental temperature of the refrigerated storage and the target temperature of the refrigerated storage, the embodiment of the present disclosure can determine the thermal load capacity inside the refrigerated storage. Further, according to the thermal load capacity, by controlling the first refrigeration system and the second refrigeration system to operate accurately, the embodiment of the present disclosure can rapidly reduce the temperature inside the refrigerated storage in the early storage period and maintain the low temperature inside the refrigerated storage by cool-storage in the later storage period, benefitting for saving energy.

The above general description and the description below are exemplary and explanatory only and are not intended to limit the present disclosure.

### BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, where:
Fig. 1 is a schematic environmental diagram of a refrigerated storage provided by the embodiment of the present disclosure;
Fig. 2 is a schematic structure diagram of the refrigerated storage provided by the embodiment of the present disclosure;
Fig. 3 is a schematic structure diagram of another refrigerated storage provided by the embodiment of the present disclosure;
Fig. 4 is a block diagram of a controlling method for refrigerated storage provided by the embodiment of the present disclosure;
Fig. 5 is a flowchart of another controlling method for refrigerated storage provided by the embodiment of the present disclosure;
Fig. 6 is a block diagram of yet another controlling method for refrigerated storage provided by the embodiment of the present disclosure;
Fig. 7 is a block diagram of yet another controlling method for refrigerated storage provided by the embodiment of the present disclosure;
Fig. 8 is a schematic diagram of a controlling device for refrigerated storage provided by the embodiment of the present disclosure;
Fig. 9 is a schematic structure diagram of a chilled liquid storage tank provided by the embodiment of the present disclosure; and
Fig. 10 is a schematic structure diagram of yet another refrigerated storage provided by the embodiment of the present disclosure.

### REFERENCES IN THE DRAWINGS:

100: first refrigeration system; 101: first evaporator; 102: second evaporator; 103: first chilled liquid storage tank; 104: first fan; 105: first branch; 106: second branch; 107: first throttle valve; 108: second throttle valve; 109: first condenser; 110: first compressor; 111: first auxiliary path; 112: first control valve; 113: first liquid storage tank; 200: second refrigeration system; 201: third evaporator; 202: fourth evaporator; 203: second chilled liquid storage tank; 204: second fan; 205: third branch; 206: fourth branch; 207: third throttle valve; 208: fourth throttle valve; 209: second condenser; 210: second compressor; 211: second auxiliary path; 212: second control valve; 213: second liquid storage tank; 300: controlling device for refrigerated storage; 301: processor; 302: memory; 303: communication interface; 304: bus; 400: observation portion.

### DETAILED DESCRIPTION OF THE EMBODIMENTS

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "comprise" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

The term "corresponding" refers to an association or binding relationship, and A corresponding to B refers to an association or binding relationship between A and B.

At present, a refrigerated storage is applied in storing refrigerating goods. Two types of conventional refrigerated storage, one is applied for medium-term to long-term storage, and the other is applied for temporary storage during transiting. The former type of refrigerated storage usually adapts an air-cooled finned evaporator as a part of the refrigeration system, the air-cooled finned evaporator is disposed inside of the refrigerated storage, and the refrigeration device of the refrigerated storage is in a constant power-on mode. In a case where the refrigeration system is operating, the air inside the refrigerated storage flows through the evaporator by the fan for heat exchange to reduce the temperature in the refrigerated storage. The latter type of refrigerated storage has a chilled liquid storage tank disposed inside. The evaporator is disposed inside the chilled liquid storage tank and is a part of the refrigeration system. The latter type firstly cools the chilled liquid to store cool-storage capacity, and then cooling the air inside the refrigerated storage by natural convection to reduce the temperature in the refrigerated storage.

For the first type of refrigerated storage, in a case where the electric power is off, the temperature rises rapidly, and it is difficult to apply in an area with unstable electric power or for storing valuable goods, unless the refrigerated storage is equipped with an additional electric power generation system, otherwise, the goods have a risk to be damaged. For the second refrigerated storage, it is slow to reduce the temperature, especially in summer, while a large number of loads are stored at the same time, and it may be difficult to reduce the temperature to the optimum storage temperature in a limited period. Therefore, a solution for the refrigerated storage is urgently needed that not only can rapidly reduce the temperature but also can maintain refrigeration.

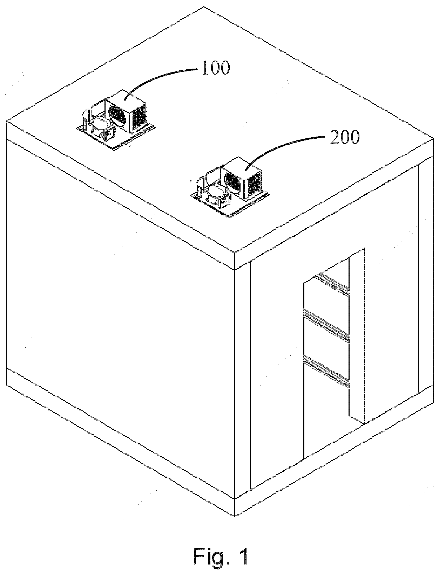

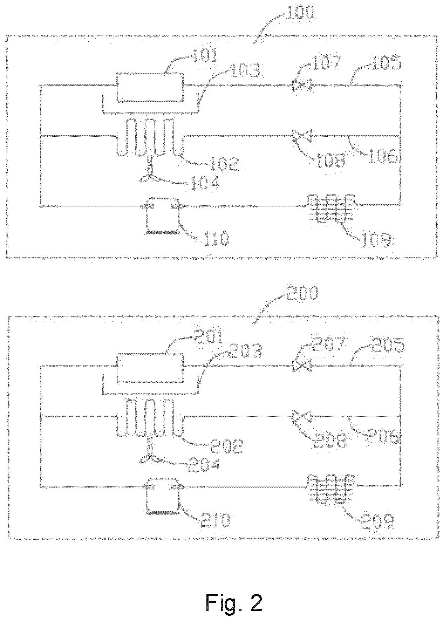

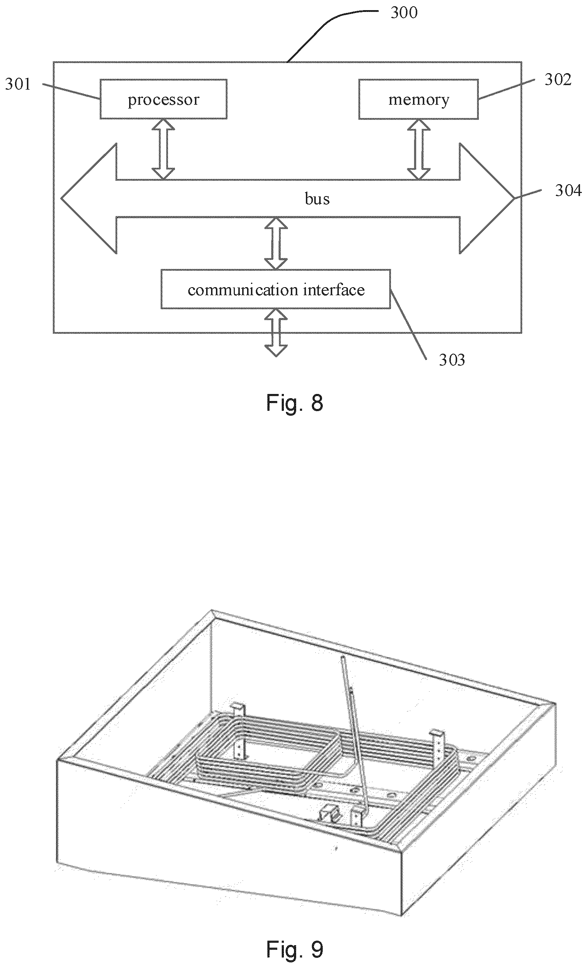

As shown in Figs. 1 to 3, a refrigerated storage provided by the embodiment of the present disclosure comprises: a first refrigeration system 100 and a second refrigeration system 200. The first refrigeration system 100 comprises a first evaporator 101, a second evaporator 102, a first chilled liquid storage tank 103, and a first fan 104. The first evaporator 101 is disposed inside the first chilled liquid storage tank 103, and the second evaporator 102 corresponds to the first fan 104. The second refrigeration system 200 comprises a third evaporator 201, a fourth evaporator 202, a second chilled liquid storage tank 203, and a second fan 204. The third evaporator 201 is disposed inside the second chilled liquid storage tank 203, and the fourth evaporator 202 corresponds to the second fan 204. The structures of the first chilled liquid storage tank 103 and the second chilled liquid storage tank 203 are shown in Fig. 9.

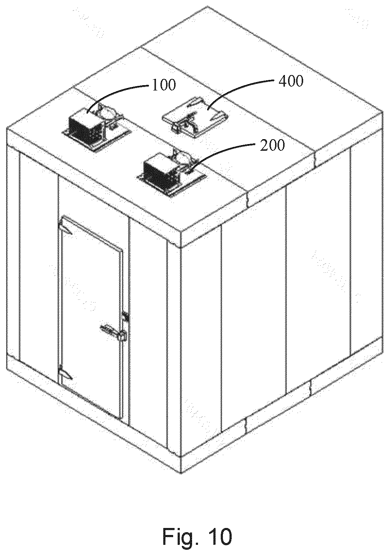

Further, another refrigerated storage is provided by the embodiment of the present disclosure, as shown in Fig. 10, an observation portion 400 is disposed on the top of the refrigerated storage. The observation portion 400 further comprises a window and a cover, the inside and the outside of the refrigerated storage are connected from the top by opening the cover and exposing the window. The observation portion 400 can be opened from the top of the refrigerated storage. Through the observation portion 400, the first chilled liquid storage tank 103 and the second chilled liquid storage tank 203 can be injected with water and the water volume and the ice storage volume of the first chilled liquid storage tank 103 and the second chilled liquid storage tank 203 can be determined respectively, for providing a basis for maintenance.

The refrigerated storage provided by the embodiment of the present disclosure is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By controlling the first refrigeration system 100 and the second refrigeration system 200 to operate accurately, the embodiment of the present disclosure can rapidly reduce the temperature inside the refrigerated storage in the early storage period and maintain the low temperature inside the refrigerated storage by cool-storage in the later storage period, benefitting for saving energy.

Optionally, the first evaporator 101 is disposed in a first branch 105, the second evaporator 102 is disposed in a first branch 106, and the first branch 105 and the second branch 106 are provided in parallel. The third evaporator 201 is disposed in a third branch 205, the fourth evaporator 202 is disposed in a fourth branch 206, and the third branch 205 and the fourth branch 206 are provided in parallel. Thus, the embodiment of the present disclosure can control the first evaporator 101, the second evaporator 102, the third evaporator 201, and the fourth evaporator 202 to operate for refrigeration individually or in combination to reduce the temperature inside the refrigerated storage reasonably.

Optionally, a first throttle valve 107 is disposed in the first branch 105, and a second throttle valve 108 is disposed in the second branch 106. A third throttle valve 207 is disposed in the third branch 205, and a fourth throttle valve 208 is disposed in the fourth branch 206. By adjusting the on-off state of the throttle valves, the embodiment of the present disclosure can control the corresponding branch to be conducted or disconnected, realizing the plurality of evaporators to operate for refrigeration individually or in combination, reducing the temperature inside the refrigerated storage reasonably.

Optionally, the first refrigeration system 100 further comprises a first condenser 109 and a first compressor 110. Thus, a refrigerant cycle loop is formed by the first compressor 110, the first condenser 109, the first evaporator 101, and the second evaporator 102, so that the temperature inside the refrigerated storage can be continuously reduced by the refrigeration operation.

Optionally, the second refrigeration system 200 further comprises a second condenser 209 and a second compressor 210. Thus, a refrigerant cycle loop is formed by the second compressor 210, the second condenser 209, the third evaporator 201, and the fourth evaporator 202, so that the temperature inside the refrigerated storage can be continuously reduced by the refrigeration operation.

Optionally, the first refrigeration system 100 further comprises a first auxiliary path 111. One end of the first auxiliary path 111 is connected to the exhaust pipeline of the first compressor 110, and the other end of the first auxiliary path 111 is connected to the pipeline between the second evaporator 102 and the second throttle valve 108. A first control valve 112 is disposed in the first auxiliary path 111. In a case where the temperature inside the refrigerated storage is low and has a heating requirement, the embodiment of the present disclosure can turn on the first control valve 112 to conduct the first auxiliary path 111. Meanwhile, turn off the first throttle valve 107 and the second throttle valve 108 to form a refrigerant cycle loop by the first compressor 110, the first control valve 112, and the second evaporator 102. In this case, the second evaporator 102 operates as a condenser, and the first fan 104 exchanges heat with air inside the refrigerated storage, for increasing the temperature inside the refrigerated storage.

Optionally, the first refrigeration system 100 further comprises a first liquid storage tank 113. The first liquid storage tank 113 is disposed in the suction pipeline of the first compressor 110. In a case where the first refrigeration system 100 operates in the above heating mode, the gaseous refrigerant turns into liquid refrigerant after flowing through the second evaporator 102 operated as a condenser and flows into the first liquid storage tank 113. Therefore, the embodiment of the present disclosure can avoid liquid hammering caused by the liquid refrigerant directly flowing into the first compressor 110, improving the reliability of the first refrigeration system 100.

Optionally, a first heating device is disposed inside the first liquid storage tank 113. The first heating device is configured to heat the liquid refrigerant inside the first liquid storage tank 113. Thus, by controlling the first heating device to operate, the liquid refrigerant inside the first liquid storage tank 113 turns into the gaseous refrigerant, realizing the air refill of the first compressor 110.

Optionally, the second refrigeration system 200 further comprises a second auxiliary path 211. One end of the second auxiliary path 211 is connected to the exhaust pipeline of the second compressor 210, and the other end of the second auxiliary path 211 is connected to the pipeline between the fourth evaporator 202 and the fourth throttle valve 208. A second control valve 212 is disposed in the second auxiliary path 211. In a case where the temperature inside the refrigerated storage is low and has a heating requirement, the embodiment of the present disclosure can turn on the second control valve 212 to conduct the second auxiliary path 211. Meanwhile, turn off the third throttle valve 207 and the fourth throttle valve 208 to form a refrigerant cycle loop by the second compressor 210, the second control valve 212, and the fourth evaporator 202. In this case, the fourth evaporator 202 operates as a condenser, and the second fan 204 exchanges heat with air inside the refrigerated storage, for increasing the temperature inside the refrigerated storage.

Optionally, the second refrigeration system 200 further comprises a second liquid storage tank 213. The second liquid storage tank 213 is disposed in the suction pipeline of the second compressor 210. In a case where the second refrigeration system 200 operates in the above heating mode, the gaseous refrigerant turns into liquid refrigerant after flowing through the fourth evaporator 202 operated as the condenser, and flows into the second liquid storage tank 213. Therefore, the embodiment of the present disclosure can avoid liquid hammering caused by the liquid refrigerant directly flowing into the second compressor 210, improving the reliability of the second refrigeration system 200.

Optionally, a second heating device is disposed inside the second liquid storage tank 213. The second heating device is configured to heat the liquid refrigerant inside the second liquid storage tank 213. Thus, by controlling the second heating device to operate, the liquid refrigerant inside the second liquid storage tank 213 turns into the gaseous refrigerant, realizing the air refill of the second compressor 210.

Optionally, the first throttle valve 107, the second throttle valve 108, the third throttle valve 207, and the fourth throttle valve 208 are electronic expansion valves. By controlling the opening degree of each electronic expansion valve, the embodiment of the present disclosure can control the corresponding branch to conduct or disconnect, and accurately control the refrigerant flow at the corresponding branch, so as to regulate the temperature inside the refrigerated storage reasonably.

Optionally, the first control valve 112 and the second control valve 212 are solenoid valves. By controlling the on-off state of each solenoid valve, the embodiment of the present disclosure can control the corresponding pipeline to conduct or disconnect to switch the operation mode of each refrigeration system, so as to regulate the temperature inside the refrigerated storage reasonably.

Optionally, the first evaporator 101 and the third evaporator 201 are smooth surface copper tube evaporators. The above evaporators are disposed inside the chilled liquid storage tank. The refrigerated storage firstly cools the chilled liquid to store refrigeration capacity, and then cools the air inside the refrigerated storage by natural convection, so as to reduce the temperature in the refrigerated storage.

Optionally, the second evaporator 102 and the fourth evaporator 202 are finned evaporators. The above evaporators are disposed corresponding to the fans, under the influence of the fans, the air inside the refrigerated storage flows through the above evaporators to complete the heat exchange, so as to reduce the temperature inside the refrigerated storage.

Optionally, according to the requirement, fins of the first evaporator 101 and the third evaporator 201 can be added.

Optionally, the refrigerated storage further comprises a humidifying device. In a case where the humidity inside the refrigerated storage is low, by operating the humidifying device, the embodiment of the present disclosure can increase the humidity inside the refrigerated storage reasonably, conducive to goods storage.

Optionally, the refrigerated storage further comprises an environmental temperature sensor. The environmental temperature sensor is disposed inside the refrigerated storage and is configured to obtain the environmental temperature of the refrigerated storage. The embodiment of the present disclosure can control the operation of the refrigeration system by detecting the environmental temperature of the refrigerated storage, conducive to regulating the temperature inside the refrigerated storage reasonably.

Optionally, the refrigerated storage further comprises a first cool-storage temperature sensor and a second cool-storage temperature sensor. The first cool-storage temperature sensor is disposed inside the first chilled liquid storage tank 103 and is configured to obtain a first cool-storage temperature. The second cool-storage temperature sensor is disposed inside the second chilled liquid storage tank 203 and is configured to obtain a second cool-storage temperature. The embodiment of the present disclosure can control the operation of the refrigeration system by detecting each cool-storage temperature of the chilled liquid storage tank to balance the cool-storage capacity inside the two chilled liquid storage tanks, so as to ensure the uniformity of the temperature inside the refrigerated storage.

Optionally, the refrigerated storage further comprises an environmental humidity sensor. The environmental humidity sensor is disposed inside the refrigerated storage and is configured to obtain the environmental humidity of the refrigerated storage. The embodiment of the present disclosure can control the operation of the refrigeration system by detecting the environmental humidity of the refrigerated storage, conducive to regulating the humidity inside the refrigerated storage reasonably.

Optionally, the refrigerated storage further comprises a controlling device 300 for refrigerated storage. The controlling device 300 for refrigerated storage is electrically connected with the first refrigeration system 100 and the second refrigeration system 200. The embodiment of the present disclosure can perform the corresponding controlling methods by the device to accurately control the operation of the first refrigeration system and the second refrigeration system.

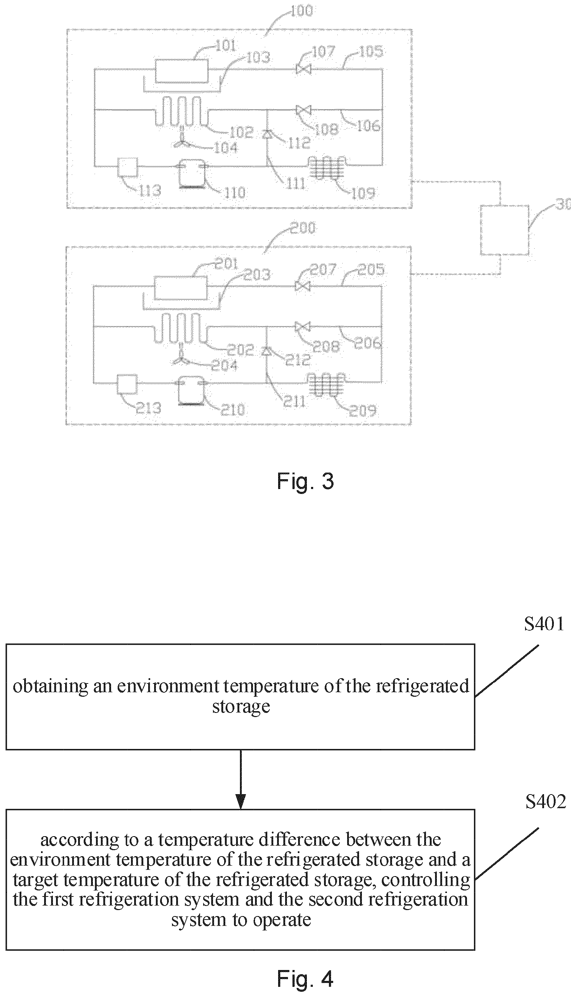

Based on the above refrigerated storage, as shown in Fig. 4, the embodiment of the present disclosure provides a controlling method for refrigerated storage comprising:
S401, the processor obtains the environmental temperature of the refrigerated storage; and
S402, according to the temperature difference between the environmental temperature of the refrigerated storage and a target temperature of the refrigerated storage, the processor controls the first refrigeration system and the second refrigeration system to operate.

With the controlling method for refrigerated storage provided by the embodiment of the present disclosure, the refrigerated storage is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By detecting the environmental temperature of the refrigerated storage and calculating the temperature difference between the environmental temperature of the refrigerated storage and the target temperature of the refrigerated storage, the embodiment of the present disclosure can determine a thermal load capacity inside the refrigerated storage. Further, according to the thermal load capacity, by controlling the first refrigeration system and the second refrigeration system to operate accurately, the embodiment of the present disclosure can rapidly reduce the temperature inside the refrigerated storage in the early storage period and maintain the low temperature inside the refrigerated storage by cool-storage in the later storage period, benefitting for saving energy.

Optionally, the step of, according to the temperature difference between the environmental temperature of the refrigerated storage and the target temperature of the refrigerated storage, the processor controls the first refrigeration system and the second refrigeration system to operate, comprises: in a case where the temperature difference between the environmental temperature of the refrigerated storage and the target temperature of the refrigerated storage is greater than a preset temperature difference, the processor controls the first refrigeration system to operate in the rapid cooling mode and controls the second refrigeration system to operate in the rapid cooling mode; or, in a case where the temperature difference between the environmental temperature of the refrigerated storage and the target temperature of the refrigerated storage is lower than or equal to the preset temperature difference, according to a first cool-storage temperature and a second cool-storage temperature, the processor controls the first refrigeration system and the second refrigeration system to operate. Thus, in a case where the temperature inside the refrigerated storage is high, the temperature difference between the detected environmental temperature of the refrigerated storage and the target temperature of the refrigerated storage is greater than the preset temperature difference, and the thermal load capacity inside the refrigerated storage is large. By controlling the first refrigeration system and the second refrigeration system to operate in the rapid cooling mode simultaneously, the embodiment of the present disclosure can improve the overall refrigeration capacity of the refrigeration system, benefitting rapidly reducing the temperature inside the refrigerated storage in the early storage period. In a case where the temperature difference between the detected environmental temperature of the refrigerated storage and the target temperature of the refrigerated storage is lower than or equal to the preset temperature difference, the temperature in the refrigerated storage is normal and the thermal load capacity inside the refrigerated storage is small. In this case, the embodiment of the present disclosure can further, according to the first cool-storage temperature and the second cool-storage temperature, control the first refrigeration system and the second refrigeration system to operate so as to store cool energy for the chilled liquid inside the chilled liquid storage tank under the premise of ensuring the low temperature inside the refrigerated storage.

Optionally, the step of, according to the first cool-storage temperature and the second cool-storage temperature, the processor controls the first refrigeration system and the second refrigeration system to operate, comprises: in a case where the first cool-storage temperature is lower than or equal to a temperature threshold and the second cool-storage temperature is lower than or equal to the temperature threshold, the processor controls the first refrigeration system to operate in the cool-storage cooling mode and controls the second refrigeration system to operate in the cool-storage cooling mode; or in a case where the first cool-storage temperature is greater than the temperature threshold or the second cool-storage temperature is greater than the temperature threshold, according to a comparison result of the first cool-storage temperature and the second clod storage temperature the processor controls the first refrigeration system and the second refrigeration system to operate. The first cool-storage temperature is defined as the detected temperature of the chilled liquid inside the first chilled liquid storage tank and the second cool-storage temperature is defined as the detected temperature of the chilled liquid inside the second chilled liquid storage tank. In a case where the first cool-storage temperature is lower than or equal to the temperature threshold and the second cool-storage temperature is lower than or equal to the temperature threshold, showing that the two chilled liquid storage tanks are completed cool-storage, and the chilled liquid inside the chilled liquid storage tanks have stored enough cool-storage capacity. By controlling the first refrigeration system and the second refrigeration system to operate in the cool-storage cooling mode simultaneously, the embodiment of the present disclosure can maintain the low temperature inside the refrigerated storage by the cool-storage capacity of the chilled liquid stored in the later storage period, so as to save energy. In a case where the first cool-storage temperature is greater than the temperature threshold or the second cool-storage temperature is greater than the temperature threshold, showing that the chilled liquid storage tanks do not complete cool-storage. In this case, the embodiment of the present disclosure can further, according to the comparison result of the first cool-storage temperature and the second cool-storage temperature, control the first refrigeration system and the second refrigeration system to operate to balance the cool-storage capacity inside the two chilled liquid storage tanks, so as to ensure the uniformity of the temperature inside the refrigerated storage.

Optionally, the step of, according to the comparison result of the first cool-storage temperature and the second cool-storage temperature, the processor controls the first refrigeration system and the second refrigeration system to operate, comprises: in a case where the first cool-storage temperature is greater than or equal to the second cool-storage temperature, the processor controls the first refrigeration system to operate in the cool-storage cooling mode and controls the second refrigeration system operate in the rapid cooling mode; or in a case where the first cool-storage temperature is lower than the second cool-storage temperature, the processor controls the first refrigeration system to operate in the rapid cooling mode and controls the second refrigeration system to operate in the cool-storage cooling mode. In a case where the first cool-storage temperature is greater than or equal to the second cool-storage temperature, showing that the cool-storage capacity of the first chilled liquid storage tank is greater than the cool-storage capacity of the second chilled liquid storage tank. By controlling the first refrigeration system to operate in the cool-storage cooling mode, the embodiment of the present disclosure can store cool energy for the first chilled liquid storage tank to increase the cool-storage capacity, ensuring the uniformity of the temperature inside the refrigerated storage; simultaneous, by controlling the second refrigeration system to operate in the rapid cooling mode, the embodiment of the present disclosure can make up the slow speed of cooling temperate caused by the lack of cool-storage capacity of the first refrigeration system, so as to rapidly regulate the temperature inside the refrigerated storage, ensuring the uniformity of the temperature inside the refrigerated storage. Contrariwise, in a case where the first cool-storage temperature is lower than the second cool-storage temperature, showing that the cool-storage capacity of the second chilled liquid storage tank is lower than the cool-storage capacity of the first chilled liquid storage tank. By controlling the second refrigeration system to operate in the cool-storage cooling mode, the embodiment of the present disclosure can store cool energy for the second chilled liquid storage tank to increase the cool-storage capacity, ensuring the uniformity of the temperature inside the refrigerated storage; simultaneous, controlling the first refrigeration system to operate in the rapid cooling mode, the embodiment of the present disclosure can make up slow speed of cooling temperate caused by the lack of cool-storage capacity of the second refrigeration system, so as to rapidly regulate the temperature inside the refrigerated storage, ensuring the uniformity of the temperature inside the refrigerated storage.

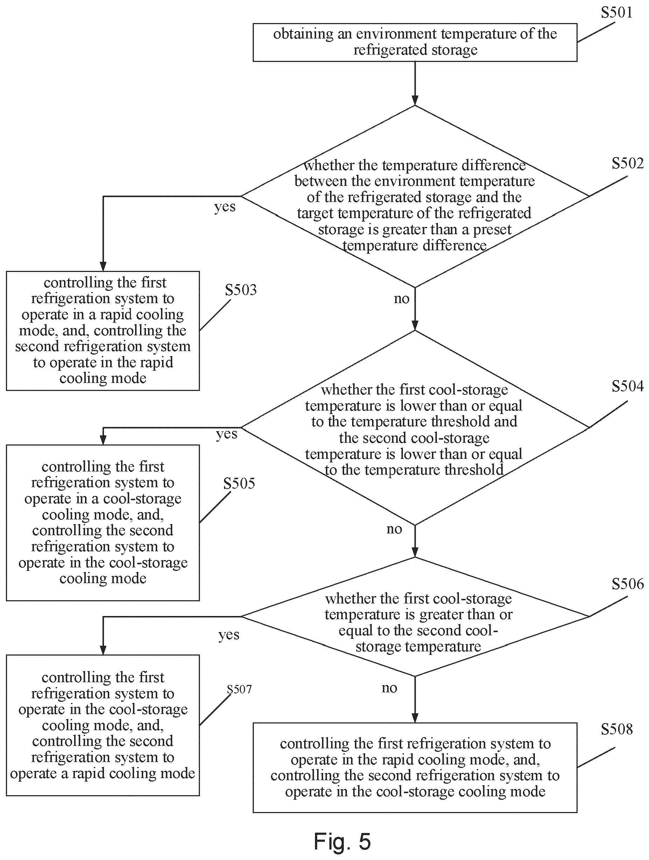

According to the above refrigerated storage, as shown in Fig. 5, the embodiment of the present disclosure provides another controlling method for refrigerated storage comprising:
S501, the processor obtains the environmental temperature of the refrigerated storage;
S502, the processor determines whether the temperature difference between the environmental temperature of the refrigerated storage and the target temperature of the refrigerated storage is greater than the preset temperature difference; if so, step 503 is performed, if not, step S504 is performed;
S503, the processor controls the first refrigeration system to operate in a rapid cooling mode and controls the second refrigeration system to operate in a rapid cooling mode;
S504, the processor determines whether the first cool-storage temperature is lower than or equal to the temperature threshold and the second cool-storage temperature is lower than or equal to the temperature threshold; if so, step 505 is performed; if not, step 506 is performed;
S505, the processor controls the first refrigeration system to operate in a cool-storage cooling mode and controls the second refrigeration system to operate in a cool-storage cooling mode;
S506, the processor determines whether the first cool-storage temperature is greater than or equal to the second cool-storage temperature; if so, step 507 is performed; if not, step 508 is performed;
S507, the processor controls the first refrigeration system to operate in the cool-storage cooling mode, and controls the second refrigeration system to operate in the rapid cooling mode; and
S508, the processor controls the first refrigeration system to operate in the rapid cooling mode, and controls the second refrigeration system to operate in the cool-storage cooling mode.

The controlling method for refrigerated storage by the embodiment of the present disclosure, the refrigerated storage is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By detecting the environmental temperature of the refrigerated storage and calculating the temperature difference between the environmental temperature of the refrigerated storage and the target temperature of the refrigerated storage, the embodiment of the present disclosure can determine the thermal load capacity inside the refrigerated storage. Further, by controlling the first refrigeration system and the second refrigeration system to operate accurately, in a case where the thermal load capacity inside the refrigerated storage is large in the early storage period, the embodiment of the present disclosure can improve the overall refrigeration capacity of the refrigeration system, so as to rapidly reduce the temperature inside the refrigerated storage. In a case where the thermal load capacity inside the refrigerated storage is small in the later storage period, the embodiment of the present disclosure can maintain the low temperature inside the refrigerated storage by the cool-storage capacity of the chilled liquid stored in the later storage period, so as to save energy. Further, the embodiment of the present disclosure can store cool energy for the chilled liquid inside the chilled liquid storage tank under the premise of ensuring the low temperature inside the refrigerated storage and ensuring the uniformity of the temperature inside the refrigerated storage by balancing the cool-storage capacity inside the two chilled liquid storage tanks. In addition, the first refrigeration system and the embodiment of the present disclosure operate alternately, the embodiment of the present disclosure can avoid the problem of frost forming on the evaporator caused by a single refrigeration system operating for a long time.

Optionally, the step of, the processor controls the first refrigeration system to operate in the cool-storage cooling mode, comprises: the processor controls the first branch to conduct and controls the second branch to disconnect. In a case where the first refrigeration system operates in the cool-storage cooling mode, the embodiment of the present disclosure conducts the first branch to control the first evaporator to operate, and disconnects the second branch simultaneously to control the second evaporator not to operate. In this case, the first refrigeration system stores cool energy for the chilled liquid inside the first chilled liquid storage tank by the first evaporator, the air inside the refrigerated storage exchanges heat with the chilled liquid by natural convection, so as to reduce the temperature in the storage.

Optionally, the step of, the processor controls the first refrigeration system to operate in the rapid cooling mode, comprises: the processor controls the first branch to disconnect and controls the second branch to conduct. In a case where the first refrigeration system operates in the rapid cooling mode, the embodiment of the present disclosure conducts the second branch to control the second evaporator to operate, and disconnects the first branch simultaneously to control the first evaporator not to operate. In this case, under the influence of the first fan, the first refrigeration system exchanges heat with the air inside the refrigerated storage by the second evaporator, so as to reduce the temperature inside the refrigerated storage.

Optionally, the step of the processor controls the second refrigeration system to operate in the cool-storage cooling mode, comprises: the processor controls the third branch to conduct and controls the fourth branch to disconnect. In a case where the second refrigeration system operates in the cool-storage cooling mode, the embodiment of the present disclosure conducts the third branch to control the third evaporator to operate, and disconnects the fourth branch simultaneously to control the fourth evaporator not to operate. In this case, the second refrigeration system stores cool energy for the chilled liquid inside the second chilled liquid storage tank by the third evaporator, the air inside the refrigerated storage exchanges heat with the chilled liquid by natural convection, so as to reduce the temperature in the storage.

Optionally, the step of, the processor controls the second refrigeration system to operate in the rapid cooling mode, comprises: the processor controls the third branch to disconnect and controls the fourth branch to conduct. In a case where the second refrigeration system operates in the rapid cooling mode, the embodiment of the present disclosure conducts the fourth branch to control the fourth evaporator to operate, and disconnects the third branch simultaneously to control the third evaporator not to operate. In this case, under the influence of the second fan, the second refrigeration system exchanges heat with the air inside the refrigerated storage by the fourth evaporator, so as to reduce the temperature inside the refrigerated storage.

Optionally, the preset temperature difference can be set according to the refrigerated storage configuration information or the stored goods information. In a case where the area of the refrigerated storage is large, a slightly larger temperature difference can be set by the embodiment of the present disclosure to store cool energy early for the chilled liquid inside the chilled liquid storage tank. In a case where the stored goods are a lot, a slightly smaller temperature difference can be set by the embodiment of the present disclosure to ensure most of the stored goods can quickly in a low-temperature storage environment. Preferably, the preset temperature difference is set to 1°C. The preset temperature difference can be adjusted according to the actual requirement of the user, and can also be set to any other value such as 0.5°C or 2°C.

Optionally, the temperature threshold can be set according to the properties of the chilled liquid. Specifically, in a case where the chilled liquid is water, the embodiment of the present disclosure can set the temperature threshold as the freezing point of water, this is, the temperature threshold is 0°C. The temperature threshold can also be adjusted according to the environmental temperature inside the refrigerated storage or the preservation period while powered off, and can also be set to any other value, such as -0.5°C or 0.5°C.

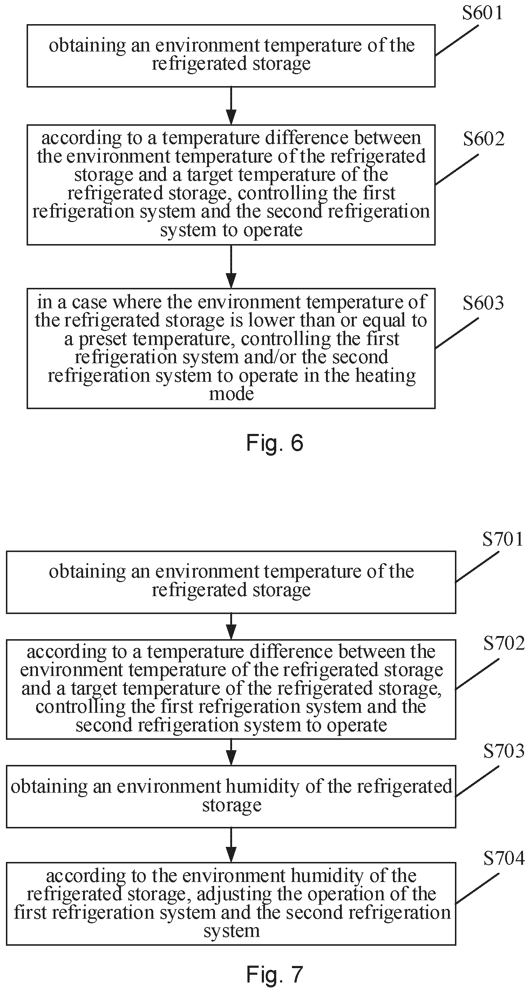

Based on the above refrigerated storage, as shown in Fig. 6, the embodiment of the present disclosure provides another controlling method for refrigerated storage comprising:
S601, the processor obtains the environmental temperature of the refrigerated storage;
S602, according to the temperature difference between the environmental temperature of the refrigerated storage and the target temperature of the refrigerated storage, the processor controls the first refrigeration system and the second refrigeration system to operate; and
S603, in a case where the environmental temperature of the refrigerated storage is lower than or equal to the preset temperature, the processor controls the first refrigeration system and/or the second refrigeration system to operate in the heating mode.

The controlling method for refrigerated storage by the embodiment of the present disclosure, the refrigerated storage is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By detecting the environmental temperature of the refrigerated storage and calculating the temperature difference between the environmental temperature of the refrigerated storage and the target temperature of the refrigerated storage, the embodiment of the present disclosure can determine the thermal load capacity inside the refrigerated storage. Further, according to the thermal load capacity, by controlling the first refrigeration system and the second refrigeration system operate accurately, the embodiment of the present disclosure can rapidly reduce the temperature inside the refrigerated storage in the early storage period and maintain the low temperature inside the refrigerated storage by cool-storage in the later storage period, benefitting for saving energy. In addition, in a case where the environmental temperature of the refrigerated storage is detected to be lower than the preset temperature, showing that the current temperature of the refrigerated storage is low, and is not beneficial for storage of goods. Therefore, the embodiment of the present disclosure controls the first refrigeration system and/or the second refrigeration system to operate in the heating mode to improve the temperature inside the refrigerated storage, so as to create a more suitable storage temperature.

Optionally, the step of, the processor controls the first refrigeration system to operate in the heating mode, comprises: the processor controls the first auxiliary path to conduct, and controls the first branch and the second branch to disconnect. In a case where the first refrigeration system operates in the heating mode, the embodiment of the present disclosure conducts the first auxiliary path, and disconnects the first branch and second branch, so as to control the second evaporator to operate as a condenser. In this case, under the influence of the first fan, the first refrigeration system exchanges heat with the air inside the refrigerated storage by the second evaporator, so as to increase the temperature inside the refrigerated storage.

Optionally, the step of, the processor controls the second refrigeration system to operate in the heating mode, comprises: the processor controls the second auxiliary path to conduct, and controls the third branch and the fourth branch to disconnect. In a case where the second refrigeration system operates in the heating mode, the embodiment of the present disclosure conducts the second auxiliary path, and disconnects the third branch and fourth branch, so as to control the fourth evaporator to operate as a condenser. In this case, under the influence of the second fan, the second refrigeration system exchanges heat with the air inside the refrigerated storage by the fourth evaporator, so as to increase the temperature inside the refrigerated storage.

Optionally, the preset temperature can be set according to the stored goods information. In a case where the goods are not adapted to be stored in a low-temperature environment, the embodiment of the present disclosure can set a slightly larger preset temperature, so as to adjust the temperature inside the refrigerated storage rise timely. Preferably, the preset temperature difference is set to 2°C. The preset temperature can be adjusted according to the actual requirement of the user, and can also be set to any other value such as 1 °C or 3 °C.

Based on the above refrigerated storage, as shown in Fig. 7, the embodiment of the present disclosure provides another controlling method for refrigerated storage comprising:
S701, the processor obtains the environmental temperature of the refrigerated storage;
S702, according to the temperature difference between the environmental temperature of the refrigerated storage and the target temperature of the refrigerated storage, the processor controls the first refrigeration system and the second refrigeration system to operate;
S703, the processor obtains the environmental humidity of the refrigerated storage; and
S704, according to the environmental humidity of the refrigerated storage, the processor adjusts the first refrigeration system and the second refrigeration system to operate.

The controlling method for refrigerated storage by the embodiment of the present disclosure, the refrigerated storage is provided with two sets of refrigeration systems, and each set of refrigeration systems is equipped with an air-cooled evaporator and a water-cooled evaporator. The plurality of evaporators can operate for refrigeration individually or in combination to reduce the temperature inside the refrigerated storage reasonably. By detecting the environmental temperature of the refrigerated storage and calculating the temperature difference between the environmental temperature of the refrigerated storage and the target temperature of the refrigerated storage, the embodiment of the present disclosure can determine the thermal load capacity inside the refrigerated storage. Further, according to the thermal load capacity, by controlling the first refrigeration system and the second refrigeration system to operate accurately, the embodiment of the present disclosure can rapidly reduce the temperature inside the refrigerated storage in the early storage period and maintain the low temperature by cool-storage in the later storage period, benefitting for saving energy. In addition, the embodiment of the present disclosure continuously detects the environmental humidity of the refrigerated storage, in a case where the environmental humidity of the refrigerated storage is not suitable, adjusting the operation of the first refrigeration system and the second refrigeration system timely, improving the humidity condition inside the refrigerated storage, so as to create a more suitable refrigerated storage environment.

Optionally, the step of, according to the environmental humidity of the refrigerated storage, the processor adjusts the first refrigeration system and the second refrigeration system to operate, comprises: in a case where the environmental humidity of the refrigerated storage is greater than a first preset humidity, the processor controls the second branch to conduct, and/or, controls the fourth branch to conduct. Thus, in a case where the environmental humidity of the refrigerated storage is greater than the first preset humidity, showing that the current humidity of the refrigerated storage is high, and is not beneficial to long-term storage for some goods. In this case, the embodiment of the present disclosure controls the first refrigeration system to conduct the second branch, and/or, controls the second refrigeration system to conduct the fourth branch, so that the second evaporator and/or the fourth evaporator can be involved in the refrigeration operation. Under the influence of the fan, the above evaporators exchange heat with the air inside the refrigerated storage to reduce the temperature inside the refrigerated storage. As the cooling mode continues to operate, the temperature of the coil of the above evaporators will fall below the dew point temperature, and nearby moisture will gradually adhere to the evaporators to form condensation. Therefore, the embodiment of the present disclosure can further reduce the humidity of the storage.

Optionally, the controlling method for refrigerated storage further comprises: in a case where the environmental humidity of the refrigerated storage is lower than a second preset humidity, the processor controls a humidifying device to operate. The second preset humidity is lower than the first preset humidity. In a case where the environmental humidity of the refrigerated storage is lower than the second preset humidity, showing that the current humidity of the refrigerated storage is low, and is not beneficial to long-term storage for some goods. The embodiment of the present disclosure controls the humidifying device to operate to improve the humidity of the refrigerated storage, so as to create a more suitable storage environment.

Optionally, the first preset humidity and the second preset humidity can be set according to the stored goods information. The second preset humidity is lower than the first preset humidity. Preferably, the first preset humidity is set to 60% and the second preset humidity is set to 40%. The first preset humidity and the second humidity can be adjusted according to the actual requirement of the user and can be set to any other values.

As shown in Fig. 8, the embodiment of the present disclosure provides a controlling device 300 for refrigerated storage comprising: a processor 301 and a memory 302. Optionally, the controlling device further comprises a communication interface 303 and a bus 304. The processor 301, the communication interface 303, and the memory 302 can communicate with each other via the bus 304. The communication interface 303 can be used for information transmission. The processor 301 can invoke logic instructions stored in the memory 302 to perform the above controlling methods for the refrigerated storage of the embodiments described.

Further, the logic instructions in the above memory 302 can be stored in a computer-readable storage medium when implemented in the form of software functional units and sold or used as an independent product.

The memory 302 serves as a computer-readable storage medium for storing software programs and computer-executable programs such as program instructions/modules corresponding to the controlling methods in the disclosed embodiments. The processor 301 executes functional applications and processes data by running program instructions/modules stored in the memory 302, this is, implementing the controlling methods for the refrigerated storage of the above embodiments.

The memory 302 can comprise a storage program partition and a storage data partition, where the storage program partition can store an operating system and an application program required for at least one function; the storage data partition can store data or the like created according to the use of the terminal device. Further, the memory 302 can comprise a high-speed random access memory, and can further comprise a non-volatile memory.

A computer-readable storage medium is provided by the embodiment of the present disclosure and stores computer-executable instructions configured to perform the above controlling method for the refrigerated storage as described.

The above computer-readable storage medium can be a transient computer-readable storage medium or a non-transient computer-readable storage medium.

The embodiment of the present disclosure provides a computer program, in a case where the computer program is executed by a computer, the computer is performed the above controlling method for refrigerated storage.

The embodiment of the present disclosure provides a computer program product, and the computer program product comprises program instructions stored on the computer-readable storage medium, in a case where the program instructions are executed, the computer performs the above controlling methods for the refrigerated storage.

The technical scheme of the embodiment of the present disclosure may be embodied in the form of a software program, and the computer program product is stored in a store medium, comprises one or more instructions for causing a computer device (a personal computer, a server, or a network device, etc.) to perform all or part of the steps of the controlling methods described in the embodiments of the present disclosure. The above described storage medium can be a non-transient storage medium, comprises: a USB flash disk, a mobile hard disk drive, a read-only memory (ROM), a random access memory (RAM), a magnetic, optical disk, or other mediums storing program codes, the storage medium can also be a transient storage media.

The above description and drawings sufficiently illustrate embodiments of the present disclosure to enable practice by those skilled in the art. Other embodiments may include structural, logical, electrical, procedural, and other variations. Embodiments represent only possible variations. Unless explicitly required, individual parts and functions are optional, and the order of operation can vary. Portions and features of some embodiments may be included in or in place of portions and features of other embodiments. The wording herein is used for describing the embodiments only and is not intended to limit the claims. As used in the embodiments and the claims, the singular forms of "a", "an", and "the" are intended to include the plural forms as well, unless it's clearly indicated otherwise. Similarly, the term "and/or" as used in the present application is meant to encompass any and all possible combinations of one or more associated listed items. In addition, when used in the present application, the term "comprise" and its variants "comprises" and/or "comprising" and the like refer to the presence of stated features, integers, steps, operations, elements, and/or components, but do not exclude the presence or addition of one or more other features, integers, steps, operations, elements, components and/or groups thereof. An element defined by the phrase "comprises a..." does not, without more constraints, preclude the existence of additional identical elements in the process, method, or device that comprises the element. Herein, it is noted that each embodiment differs from another embodiment in their emphases, and they share something in common as the reference for each other. For the method, the product, and the like disclosed in the embodiments, if they correspond to the method disclosed in the embodiments, reference may be made to the corresponding description of the method.

Those skilled in the art will appreciate that the various illustrative units and algorithm steps described in connection with the embodiments disclosed herein may be implemented as electronic hardware or combinations of computer software and electronic hardware. Whether such functionality is implemented as hardware or software depends upon the particular application and design constraints imposed on the particular implementation. Those skilled in the art may implement the described functionality in varying ways for each particular application, but such an implementation should not be interpreted as causing a departure from the scope of the disclosed embodiments. It will be apparent to those skilled in the art that, for convenience and brevity of description, reference may be made to corresponding processes in the foregoing method embodiments for specific operation of the system, device, and unit described above, which will not be described in detail herein.

In the embodiments disclosed herein, the disclosed method, and manufacture (including, but not limited to, apparatus, device, etc.) may be implemented otherwise. For example, the device embodiments described above are merely illustrative, e.g., the partitioning of a unit may be only based on the logical function, and additional ways of partitioning may be possible in an actual implementation, for example, multiple units or components may be combined or integrated into another system, or some features may be omitted or not performed. Besides, the couplings or direct couplings or communicative connections shown or discussed with respect to one another may be indirect couplings or communicative connections through some interface, device, or unit, and may be electrical, mechanical, or otherwise. The units described as separate components may or may not be physically separate, and the components shown as units may or may not be physical units, in other words, they may have a single location or may be plenty of units distributed over a network. Some or all of the units may be selected as necessary to implement the embodiments herein. Moreover, the functional units in the embodiments of the present disclosure may be integrated in one processing unit, may be separate physical units, or may be integrated with two or more units in one unit.

The flowcharts and block diagrams in the drawings illustrate the architecture, functionality, and operation of possible implementations of the system, method, and computer program product in accordance with embodiments of the present disclosure. In this regard, each block in the flowchart or block diagram may represent a module, a segment, or a portion of codes, which includes one or more executable instructions for implementing the specified logical function(s). In some alternative implementations, the functions noted in the blocks may take place in a different order from those noted in the drawings. For example, two successive blocks may in fact be executed substantially in parallel, and they may sometimes be executed in the reverse order, depending upon the functionality involved. In the description of the flowcharts and block diagrams in the drawings, the operations or steps corresponding to different blocks may also occur in a different order from that disclosed in the description, sometimes without a particular order between the different operations or steps. For example, two successive operations or steps may in fact be performed substantially in parallel, and they may sometimes be performed in the reverse order, depending on the functionality involved. Each block of the block diagrams and/or flowcharts, and combinations of blocks in the block diagrams and/or flowcharts, can be implemented by special purpose hardware-based systems that perform the specified functions or acts, or implemented by combinations of special purpose hardware and computer instructions.

## Claims

1. A controlling method for a refrigerated storage, **characterized in that**, the refrigerated storage comprises a first refrigeration system and a second refrigeration system, the first refrigeration system comprises a first evaporator, a second evaporator, a first chilled liquid storage tank, and a first fan, the first evaporator is disposed inside the first chilled liquid storage tank, the second evaporator corresponds to the first fan, the second refrigeration system comprises a third evaporator, a fourth evaporator, a second chilled liquid storage tank, and a second fan, the third evaporator is disposed inside the second chilled liquid storage tank, and the fourth evaporator corresponds to the second fan; and
the controlling method comprises:
obtaining an environmental temperature of the refrigerated storage; and
according to a temperature difference between the environmental temperature of the refrigerated storage and a target temperature of the refrigerated storage, controlling the first refrigeration system and the second refrigeration system to operate.

2. The controlling method according to claim 1, wherein the step of, according to the temperature difference between the environmental temperature of the refrigerated storage and the target temperature of the refrigerated storage, controlling the first refrigeration system and the second refrigeration system to operate, comprises:
in case where the temperature difference between the environmental temperature of the refrigerated storage and the target temperature of the refrigerated storage is greater than a preset temperature difference, controlling the first refrigeration system to operate in a rapid cooling mode and the second refrigeration system to operate in a rapid cooling mode; or
in case where the temperature difference between the environmental temperature of the refrigerated storage and the target temperature of the refrigerated storage is lower than or equal to the preset temperature difference, according to a first cool-storage temperature and a second cool-storage temperature, controlling the first refrigeration system and the second refrigeration system to operate.

3. The controlling method according to claim 2, wherein the step of, according to the first cool-storage temperature and the second cool-storage temperature, controlling the first refrigeration system and the second refrigeration system to operate, comprises:
in case where the first cool-storage temperature is lower than or equal to a temperature threshold and the second cool-storage temperature is lower than or equal to the temperature threshold, controlling the first refrigeration system to operate in a cool-storage cooling mode, and controlling the second refrigeration system to operate in a cool-storage cooling mode; or
in case where the first cool-storage temperature is greater than the temperature threshold or the second cool-storage temperature is greater than the temperature threshold, according to a comparison result of the first cool-storage temperature and the second cool-storage temperature, controlling the first refrigeration system and the second refrigeration system to operate.

4. The controlling method according to claim 3, wherein the step of, according to the comparison result of the first cool-storage temperature and the second cool-storage temperature, controlling the first refrigeration system and the second refrigeration system to operate, comprises:
in case where the first cool-storage temperature is greater than or equal to the second cool-storage temperature, controlling the first refrigeration system to operate in the cool-storage cooling mode and the second refrigeration system to operate the rapid cooling mode; or
in case where the first cool-storage temperature is lower than the second cool-storage temperature, controlling the first refrigeration system to operate in the rapid cooling mode and the second refrigeration system to operate in the cool-storage cooling mode.

5. The controlling method according to claim 4, wherein the first evaporator is disposed in a first branch, the second evaporator is disposed in a second branch, the first branch and the second branch are provided in parallel, the third evaporator is disposed in a third branch, the fourth evaporator is disposed in a fourth branch, and the third branch and the fourth branch are provided in parallel;
the step of, controlling the first refrigeration system to operate in the cool-storage cooling mode, comprises: controlling the first branch to conduct and controlling the second branch to disconnect;
the step of, controlling the first refrigeration system to operate in the rapid cooling mode, comprises: controlling the first branch to disconnect and controlling the second branch to conduct;
the step of, controlling the second refrigeration system to operate in the cool-storage cooling mode, comprises: controlling the third branch to conduct and controlling the fourth branch to disconnect; and
the step of, controlling the second refrigeration system to operate in the rapid cooling mode, comprises: controlling the third branch to disconnect and controlling the fourth branch to conduct.

6. The controlling method according to any one of claims 1 to 5, further comprising:
in case where the environmental temperature of the refrigerated storage is lower than or equal to a preset temperature, controlling the first refrigeration system and/or the second refrigeration system to operate in the heating mode.

7. The controlling method according to any one of claims 1 to 6, further comprising:
obtaining an environmental humidity of the refrigerated storage; and
according to the environmental humidity of the refrigerated storage, adjusting operations of the first refrigeration system and the second refrigeration system.

8. A controlling device for a refrigerated storage, comprising a processor and a memory storing program instructions, **characterized in that**, the processor is configured to execute the controlling method for the refrigerated storage according to any one of claims 1 to 7.

9. A refrigerated storage, **characterized in that**, comprising:
a first refrigeration system, wherein the first refrigeration system comprises a first evaporator, a second evaporator, a first chilled liquid storage tank, and a first fan, the first evaporator is disposed inside the first chilled liquid storage tank, the second evaporator is disposed opposite the first fan, the first evaporator is disposed in a first branch, the second evaporator is in a second branch, and the first branch and the second branch are provided in parallel;
a second refrigeration system, wherein the second refrigeration system comprises a third evaporator, a fourth evaporator, a second chilled liquid storage tank, and a second fan, the third evaporator is disposed inside the second chilled liquid storage tank, the fourth evaporator is disposed opposite the second fan, the third evaporator is disposed in a third branch, the fourth evaporator is disposed in a fourth branch, and the third branch and the fourth branch are provided in parallel; and
the controlling device for the refrigerated storage according to claim 8, electrically connected to the first refrigeration system and the second refrigeration system.

10. The refrigerated storage according to claim 9, wherein an observation portion is disposed on the top of the refrigerated storage for injecting chilled liquid into the first chilled liquid storage tank and the second chilled liquid storage tank.

11. The refrigerated storage according to claim 9, wherein an observation portion is disposed on the top of the refrigerated storage for determining a chilled liquid volume inside the first chilled liquid storage tank and a chilled liquid volume inside the second chilled liquid storage tank.

12. A computer-readable storage medium storing program instructions, **characterized in that**, in case where the program instructions are executed, performing the controlling method for refrigerated storage according to any one of claims 1 to 7.

13. A computer program, **characterized in that**, in case where the computer program is executed by a computer, the computer performs the controlling method for refrigerated storage according to any one of claims 1 to 7.

14. A computer program product, **characterized in that**, the computer program product comprises program instructions stored on a computer-readable storage medium, in case where the program instructions are executed by a computer, the computer performs a controlling method for refrigerated storage according to any one of claims 1 to 7.
